# FASCICULE DE BREVET EUROPEEN

(11) **EP 1 347 307 B1**
(45) Date de publication et mention de la délivrance du brevet: **17.02.2010**
(21) Numéro de dépôt: 03290562.2
(22) Date de dépôt: 07.03.2003
(51) Int. Cl.: G01S 17/88

(54) **Procédé de surveillance routière pour véhicule routier s'adaptant à l'état et à la nature du revêtement**
Sich dem Zustand und der Natur der Verkleidung anpassendes Verkehrsüberwachungsverfahren für Strassenfahrzeug
Traffic monitoring method for road vehicle adapting itself to the state and nature of the coating

(30) Priorité: 21.03.2002 FR 0203545
(43) Date de publication de la demande: 24.09.2003
(73) Titulaire: Peugeot Citroën Automobiles SA, 92200 Neuilly sur Seine (FR)
(72) Inventeur: Hespel, Denis, 91200 Athis-Mons (FR); Charton, Stéphane, 75014 Paris (FR); Lardennois, Xavier, 75011 Paris (FR)

(56) Documents cités:
- EP-A- 0 049 722
- EP-A- 0 512 872
- EP-A- 0 546 928
- WO-A-97/17686
- DE-A- 3 903 501
- DE-A- 19 932 094
- US-A- 5 497 100

## Description

L'invention concerne en général les procédés de surveillance routière de véhicules routiers.

Plus précisément, l'invention concerne un procédé de surveillance routière d'un véhicule routier apte à se déplacer sur une surface de roulement et comprenant au moins un capteur orienté vers cette surface de roulement, le procédé comprenant une opération consistant à éclairer une section de la surface de roulement située face au capteur par un émetteur d'ondes de ce capteur, une opération consistant à capter les dites ondes émises par l'émetteur et réfléchies par la section à l'aide d'un récepteur du capteur produisant un signal d'amplitude fonction de l'intensité des ondes captées, une opération de traitement du signal produit par le récepteur permettant de détecter des marquages sur la surface de roulement par comparaison de l'amplitude du signal avec un jeu de seuils de détection, et une opération de détection et de choix consistant à détecter la nature et/ou l'état de la surface de roulement et à adapter les seuils de détection dudit jeu en fonction de la nature et/ou de l'état de la surface de roulement.

Des procédés de ce type sont connus de l'art antérieur, en particulier par le brevet européen EP 0 860 001, qui révèle l'utilisation de plusieurs capteurs sur un même véhicule, comprenant chacun un émetteur infra-rouge et un récepteur correspondant. L'intensité du signal reçu par les récepteurs varie en fonction de la réflectivité de la surface éclairée par l'émetteur, ce qui permet de détecter les discontinuités du revêtement de la surface de roulement. Les applications évoquées dans le brevet sont multiples. Une première application est la détection de la présence de corps étranger sur la chaussée, comme du sable, de l'herbe ou des plaques de neige. Une autre application consiste à avertir le conducteur d'un écart de trajectoire amenant le véhicule à couper une ligne blanche continue. Une dernière application consiste à lire des codes constitués de marquages disposés sur la chaussée, pour prévenir le conducteur par exemple d'un changement dans la limitation de vitesse ou de l'approche d'un croisement.

Les discontinuités, telles que les marquages sur la surface de roulement, sont détectées de façon très simple, par comparaison de la valeur du signal reçu par le récepteur de chaque capteur avec une valeur seuil. Si le signal détecté dépasse la valeur seuil, on considère par exemple qu'un marquage au sol, plus clair que la chaussée donc plus réflecteur, a été détecté par le capteur.

Pour atteindre sur l'ensemble du réseau routier les performances de détection recherchées, il est important de prendre en compte que les différents revêtements, asphalte ou béton par exemple, présentent des différences importantes de réflectivité vis-à-vis du rayonnement infra-rouge incident, et que cette réflectivité varie également suivant que le revêtement est sec ou humide.

La valeur seuil utilisée est donc adaptée en permanence pour prendre en compte les conditions climatiques et la nature du revêtement de la surface de roulement. A cette fin, on effectue une mesure différentielle du pouvoir réfléchissant moyen détecté pour la surface de roulement et du pouvoir réfléchissant des discontinuités détectées. Le pouvoir réfléchissant moyen de la surface de roulement est évalué en faisant la moyenne des valeurs obtenues par les différents détecteurs qui voient cette surface de roulement.

Cette stratégie pour adapter la valeur seuil à l'état et à la nature de la surface de roulement présente des défauts. Elle est coûteuse car elle implique l'utilisation de plusieurs capteurs, au moins un pour mesurer le pouvoir réfléchissant de la surface de roulement et un pour mesurer le pouvoir réfléchissant des discontinuités. Elle est également complexe, puisqu'elle implique une adaptation permanente des seuils par un traitement logique supplémentaire des informations recueillies par les capteurs, ce qui accroît le risque de mise en défaut du procédé et augmente la complexité et le coût de la programmation des matériels nécessaires pour la mise en oeuvre de ce procédé.

Dans ce contexte, le but de l'invention est de pallier les défauts mentionnés ci-dessus.

A cet effet, le procédé de l'invention, par ailleurs conforme à la définition générique qu'en donne le préambule ci-dessus, est essentiellement caractérisé en ce que ladite opération de détection et de choix opère un choix entre plusieurs jeux de seuils différents, les valeurs des seuils de chaque jeu étant prédéterminées, en fonction de la nature et/ou de l'état de la surface de roulement.

Dans un mode de réalisation possible de l'invention, ladite opération de détection et de choix opère un choix entre au moins un premier jeu de seuils de détection de valeurs prédéterminées correspondant à une surface de roulement en asphalte, et un deuxième jeu de seuils de détection de valeurs prédéterminées différentes correspondant à une surface de roulement en béton.

Avantageusement, ladite opération de traitement du signal peut comprendre une étape d'acquisition des valeurs de l'amplitude du signal à des instants d'acquisition successifs séparés par une période constante, et une étape de calcul à chaque instant d'acquisition d'une moyenne glissante des n dernières valeurs acquises, et ladite opération de détection et de choix peut comprendre un premier test effectué à chaque instant d'acquisition, positif si la moyenne glissante est supérieure à un premier seuil de transition de valeur prédéterminée, négatif sinon, une étape de demande de transition béton si ce premier test est positif à un instant d'acquisition et si le premier jeu de seuils de détection est utilisé à ce même instant d'acquisition pour l'opération de traitement du signal, et une étape de demande de transition asphalte si ce premier test est négatif à un instant d'acquisition et si le second jeu de seuils de détection est utilisé à ce même instant d'acquisition pour l'opération de traitement du signal.

De préférence, l'opération de détection et de choix peut conduire au choix du deuxième jeu de seuils de détection correspondant à une surface de roulement en béton si à un instant d'acquisition une demande de transition béton a été effectuée et si la première moyenne glissante reste continuellement supérieure au premier seuil de transition pendant une première durée prédéterminée suivant ledit instant d'acquisition.

Par exemple, l'opération de détection et de choix peut conduire au choix du premier jeu de seuils de détection correspondant à une surface de roulement en asphalte si à un instant d'acquisition une demande de transition asphalte a été effectuée et si la première moyenne glissante reste continuellement inférieure au premier seuil de transition pendant une seconde durée prédéterminée suivant ledit instant d'acquisition.

Avantageusement, les première et seconde durées prédéterminées peuvent être au moins égales à une seconde.

De préférence, l'opération de détection et de choix peut comprendre un deuxième test effectué à chaque instant d'acquisition, positif si la première moyenne glissante oscille autour du premier seuil de transition avec une fréquence supérieure à un second seuil de transition, négatif sinon, et conduisant au choix du deuxième jeu de seuils de détection correspondant à une surface de roulement en béton si ce deuxième test est positif.

Par exemple, lesdits premier et deuxième jeux de seuils de détection peuvent être adaptés à des surfaces de roulement sèches respectivement en asphalte et en béton, et l'opération de détection et de choix peut comprendre une étape de détection de l'état de la surface de roulement, sèche ou humide, et une étape de choix soit soit de ces premier et deuxième jeux de seuils de détection ou soit de troisième et quatrième jeux de seuils de détection de valeurs prédéterminées adaptées pour des surfaces de roulement humides respectivement en asphalte et en béton.

Avantageusement, l'opération de détection peut consister à scruter la fréquence de balayage des essuie-vitres avant du véhicule.

De préférence, n peut être supérieur ou égal à 48.

D'autres caractéristiques et avantages de l'invention ressortiront clairement de la description qui en est faite ci-après, en référence aux figures annexées parmi lesquelles,
- la figure 1 est une représentation schématique d'un capteur permettant la mise en oeuvre du procédé de l'invention,
- la figure 2 est un algorithme représentant l'opération de détection de la nature de la surface de roulement et de choix du jeu de seuils de détection approprié selon l'invention,
- la figure 3 est un algorithme représentant l'opération de détection de l'état de la surface de roulement et de choix du jeu de seuils de détection approprié selon l'invention, et
- la figure 4 est une représentation schématique du signal capté par le capteur de la figure 1 pour une surface de roulement en béton très rugueuse.

L'invention concerne un procédé de surveillance routière embarqué sur un véhicule routier apte à se déplacer sur une surface de roulement 10, typiquement une route, et comprenant au moins un capteur C1 orienté vers cette surface de roulement 10.

La surface de roulement 10 est constituée généralement d'asphalte ou de béton.

Le procédé comprend une opération consistant à éclairer une section 11 de la surface de roulement 10 située face au capteur C1 par un émetteur d'ondes 20 de ce capteur C1, une opération consistant à capter les dites ondes émises par l'émetteur 20 et réfléchies par la section 11 à l'aide d'un récepteur 30 du capteur C1 produisant un signal A d'amplitude fonction de l'intensité des ondes captées, une opération de traitement du signal A produit par le récepteur 30 permettant de détecter des marquages sur la surface de roulement 10 par comparaison de l'amplitude du signal A avec un jeu de seuils de détection, et une opération de détection et de choix consistant à détecter la nature et/ou l'état de la surface de roulement 10 et à adapter les seuils de détection dudit jeu en fonction de la nature et/ou de l'état de la surface de roulement 10.

Selon l'invention, ladite opération de détection et de choix opère un choix entre plusieurs jeux de seuils différents, les valeurs des seuils de chaque jeu étant prédéterminées, en fonction de la nature et/ou de l'état de la surface de roulement 10.

Plus précisément, ladite opération de détection et de choix opère un choix entre au moins un premier jeu de seuils de détection de valeurs prédéterminées correspondant à une surface de roulement 10 en asphalte, et un deuxième jeu de seuils de détection de valeurs prédéterminées différentes correspondant à une surface de roulement 10 en béton.

Les revêtements en béton sont caractérisés par une couleur claire et une forte rugosité, ce qui se traduit par une réflectivité à la fois élevée, relativement à l'asphalte, et très irrégulière. Aussi, les valeurs du deuxième jeu de seuils de détection, correspondant au béton, sont relativement plus élevées que celles du premier jeu de seuils de détection, correspondant à l'asphalte.

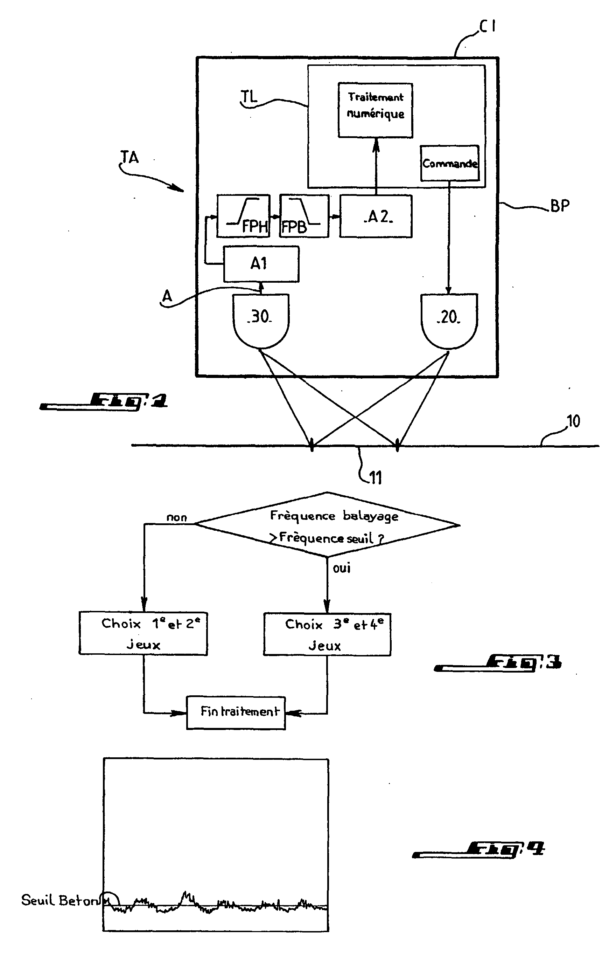

Pour une bonne compréhension de l'invention, on décrira d'abord le capteur C1 utilisé dans le procédé, en référence à la figure 1.

L'émetteur 20 émet des ondes de fréquence prédéterminée et constante, située dans le domaine de l'infrarouge.

L'amplitude du signal capté par le récepteur 30 est fonction de la réflectivité de la section 11 éclairée de la surface de roulement 10 pour des ondes de cette fréquence, cette réflectivité dépendant elle-même de la nature du matériau éclairé et de l'état de la surface de roulement.

Ainsi la surface de roulement elle-même est relativement plus sombre et moins réfléchissante et est caractérisée par un signal analogique A plus faible. Les bandes blanches ou jaunes de marquage au sol sont au contraire de couleur relativement plus claire que la surface de roulement et plus réfléchissantes et sont caractérisées par des signaux analogiques A plus forts.

Le capteur C1 comprend, outre l'émetteur 20 constitué d'une diode émettrice infrarouge et le récepteur 30 constituée d'une photodiode produisant le signal analogique A, un étage de traitement analogique TA du signal analogique A, des moyens de traitement logique TL du signal analogique A, et un boîtier de protection BP renfermant les différents éléments du capteur.

L'étage de traitement analogique TA du ou des capteurs C1 comprend en série un premier amplificateur A1 du signal analogique A produit par le récepteur 30, des filtres passe-haut FPH et passe-bas FPB permettant d'éliminer les signaux parasites dus par exemple au rayonnement solaire et à l'électronique du capteur C1, et un second amplificateur A2 permettant de compenser les variations de sensibilité des émetteurs et des récepteurs d'un capteur à l'autre.

Les moyens de traitement logique TL du signal analogique A comprennent des moyens de traitement numériques de ces valeurs, et des moyens de commande de l'émetteur 20.

On revient maintenant à la description du procédé de surveillance lui-même.

L'opération de traitement du signal A comprend une étape d'acquisition des valeurs Ak de l'amplitude du signal analogique A à des instants d'acquisition Tk successifs séparés par une période T constante, et une étape de calcul à chaque instant d'acquisition Tk d'une moyenne glissante Mn des n dernières valeurs acquises.

La période d'acquisition T est de l'ordre de 200 microsecondes.

Ces étapes sont effectuées par les moyens de traitement numérique de chaque capteur C1.

L'entier n est supérieur ou égal à 48, et vaut typiquement 64.

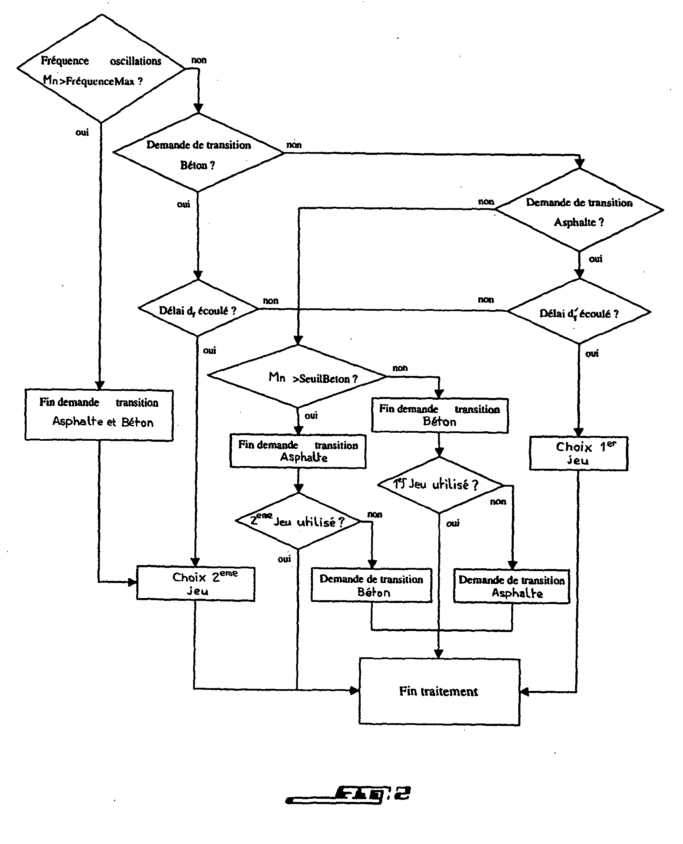

Comme on le voit sur la figure 2, l'opération de détection et de choix comprend un premier ensemble d'étapes destinées à détecter la nature de la surface de roulement, béton ou asphalte, et à choisir un jeu de seuils de détection en fonction de la nature de la surface de roulement.

A cet effet, l'opération de détection et de choix comprend un premier test effectué à chaque instant d'acquisition Tk, positif si la moyenne glissante Mn est supérieure à un premier seuil de transition de valeur prédéterminée SeuilBéton, négatif sinon, une étape de demande de transition béton si ce premier test est positif à un instant Tk et si le premier jeu de seuils de détection est utilisé à ce même instant Tk pour l'opération de traitement du signal, et une étape de demande de transition asphalte si ce premier test est négatif à un instant Tk et si le second jeu de seuils de détection est utilisé à ce même instant Tk pour l'opération de traitement du signal.

Comme le montre la figure 2, l'opération de détection et de choix conduit au choix du deuxième jeu de seuils de détection correspondant à une surface de roulement 10 en béton si à un instant d'acquisition Tk une demande de transition béton a été effectuée et si la première moyenne glissante Mn reste continuellement supérieure au premier seuil de transition SeuilBéton pendant une première durée prédéterminée Df suivant ledit instant d'acquisition Tk.

De même, l'opération de détection et de choix conduit au choix du premier jeu de seuils de détection correspondant à une surface de roulement 10 en asphalte si à un instant d'acquisition Tk une demande de transition asphalte a été effectué et si la première moyenne glissante Mn reste continuellement inférieure au premier seuil de transition SeuilBéton pendant une seconde durée prédéterminée Df' suivant ledit instant d'acquisition Tk.

Les durées Df et Df' sont généralement égales, sont au moins égales à une seconde, et sont typiquement égales à 1,5 secondes.

Dans le cas d'une transition entre un revêtement asphalte et un revêtement béton, cette durée est suffisante pour que le ou les détecteurs C1 aient entièrement franchi la zone de transition et que les zones 11 de la surface de roulement 10 situées face à chaque capteur C1 ne soient plus partiellement en asphalte et partiellement en béton.

Ce qui veut dire que, dans le cas d'une transition asphalte vers béton, la durée Df est suffisante pour que le signal Mn passe d'une valeur caractéristique d'un revêtement en asphalte à une valeur caractéristique d'un revêtement en béton.

Dans le cas inverse, c'est-à-dire une transition béton vers asphalte, la durée Df est suffisante pour que le signal Mn passe d'une valeur caractéristique d'un revêtement en béton à une valeur caractéristique d'un revêtement en asphalte.

Le premier seuil de transition SeuilBéton est fixé légèrement en dessous du niveau de fond perçu par le détecteur C1 quand le véhicule se trouve sur une surface de roulement en béton. Ce seuil est déterminé expérimentalement, en fonction des caractéristiques du ou des détecteurs C1.

Comme souligné précédemment, le béton présente une surface rugueuse, dont la réflectivité peut donc varier dans de grandes proportions. Le niveau de fond perçu par le ou les capteurs C1 peut donc varier largement, et osciller autour du premier seuil de transition SeuilBéton sans jamais se stabiliser au-dessus pour une durée supérieure à la durée Df prédéterminée, comme représenté sur la figure 4. Ce cas se produit plus fréquemment pour des revêtements dégradés, présentant donc une surface particulièrement irrégulière.

Pour permettre de réaliser quand même la transition du premier au second jeu de seuils de détection dans le cas où le véhicule passe d'un revêtement asphalte à un revêtement béton présentant un signal de fond oscillant, comme décrit ci-dessus, l'opération de détection et de choix comprend un deuxième test, effectué à chaque instant d'acquisition Tk, positif si la première moyenne glissante Mn oscille autour du premier seuil de transition SeuilBéton avec une fréquence supérieure à un second seuil de transition FréquenceMax, négatif sinon, et conduisant au choix du deuxième jeu de seuils de détections correspondant à une surface de roulement 10 en béton si ce deuxième test est positif.

Le second seuil de transition FréquenceMax est déterminé expérimentalement en fonction des caractéristiques du ou des capteurs C1. La fréquence des oscillation de la première moyenne glissante Mn autour de Seuilbéton est déterminée par exemple par transformation de Fourrier.

Comme on le voit sur la figure 3, l'opération de détection et de choix comprend un second ensemble d'étapes destinées à détecter l'état de la surface de roulement, sèche ou humide, et à adapter les jeux de seuils de détection en fonction cet état.

A cette fin, lesdits premier et deuxième jeux de seuils de détection sont adaptés respectivement à des surfaces de roulement 10 sèches en asphalte et en béton, et l'opération de détection et de choix comprend une étape de détection de l'état de la surface de roulement, sèche ou humide, et une étape de choix soit de ces premier et deuxième jeux de seuils de détection ou soit de troisième et quatrième jeux de seuils de détection de valeurs prédéterminées adaptées pour des surfaces de roulement 10 humides respectivement en asphalte et en béton.

L'étape de détection consiste à scruter la fréquence de balayage des essuie-vitres avant du véhicule. Une fréquence de balayage supérieure ou égale à une fréquence seuil prédéterminée, conduit, à l'étape de choix, à la sélection des troisième et quatrième jeux de seuils de détection. Au contraire, une fréquence de balayage inférieure à la fréquence seuil prédéterminée, conduit, à l'étape de choix, à la sélection des premier et deuxième jeux de seuils de détection.

La fréquence seuil peut être, par exemple, la fréquence de balayage permanent la plus basse qu'il est possible d'obtenir sur le véhicule.

La réflectivité d'un revêtement humide étant inférieure à la réflectivité du même revêtement sec, les valeurs des troisième et quatrième jeux de seuils de détection sont relativement plus faibles que celles des premier et deuxième jeux de seuils de détection.

Le procédé de l'invention est décrit dans son application à des surfaces de roulement en asphalte ou en béton, mais s'applique également à tout autre type de revêtement routier. Il peut être adapté pour faire la distinction entre trois types de revêtements, si ces revêtements présentent des réflectivités très différentes. Il peut également être adapté pour prendre en compte plusieurs niveaux d'humidité différents de la surface de roulement correspondant à plusieurs jeux de seuils différents.

Le procédé de l'invention est donc simple, puisqu'il fait appel à des jeux de seuils dans lesquels chaque seuil est prédéterminé. Il n'y a plus d'algorithme de calcul de ces seuils en permanence.

Par ailleurs, ce procédé peut être mis en oeuvre sur des véhicules équipés d'un capteur C1 unique. Il peut également être mis en oeuvre avec plusieurs capteurs C1 redondants.

## Revendications

1. Procédé de surveillance routière d'un véhicule routier apte à se déplacer sur une surface de roulement (10) et comprenant au moins un capteur (C1) orienté vers cette surface de roulement (10), dans lequel on :
- éclaire une section (11) de la surface de roulement (10) située face au capteur (C1) avec un émetteur d'ondes (20) de ce capteur (C1) ;
- capte les ondes réfléchies par la section (11) avec un récepteur (30) du capteur (C1) produisant un signal (A) ayant une amplitude dépendant de l'intensité des ondes captées ;
et **caractérisé en ce qu'**il comprend une opération de traitement du signal (A) issu du capteur au cours de laquelle on :
- détecte la nature de la surface de roulement (10) en identifiant des transitions entre une première et une seconde nature de surface de roulement par comparaison d'une moyenne glissante de plusieurs valeurs d'amplitudes du signal issu du récepteur (30) à des instants successifs, à un seuil de transition ;
- choisit parmi au moins deux jeux de seuils de détection prédéterminés celui correspondant à la nature de la surface de roulement détectée ;
- identifie un marquage sur la surface de roulement lorsque le signal (A) réfléchi a une amplitude supérieure à une valeur seuil prédéterminée du jeu de seuils de détection choisi.

2. Procédé de surveillance selon la revendication 1, **caractérisé en ce que** ladite opération de détection et de choix opère un choix entre au moins un premier jeu de seuils de détection de valeurs prédéterminées correspondant à une surface de roulement (10) en asphalte, et un deuxième jeu de seuils de détection de valeurs prédéterminées différentes correspondant à une surface de roulement (10) en béton.

3. Procédé de surveillance selon la revendication 2, **caractérisé en ce que** l'opération de détection et de choix comprend une étape de détection de l'état sec ou mouillé de la surface de roulement (10) et **en ce que** le jeu de seuils est choisi parmi quatre jeux de seuils correspondant respectivement à la première nature de surface de roulement sèche, à la seconde nature de surface de roulement sèche, à la première nature de surface de roulement mouillée, et à la seconde nature de surface de roulement mouillée.

4. Procédé de surveillance selon la revendication 2, **caractérisé en ce que** ladite opération de traitement du signal (A) comprend une étape d'acquisition des valeurs (Ak) de l'amplitude du signal (A) à des instants d'acquisition (Tk) successifs séparés par une période (T) constante, et une étape de calcul à chaque instant d'acquisition (Tk) d'une moyenne glissante (Mn) des n dernières valeurs acquises, et **en ce que** ladite opération de détection et de choix comprend un premier test effectué à chaque instant d'acquisition (Tk), positif si la moyenne glissante (Mn) est supérieure à un premier seuil de transition de valeur prédéterminée (SeuilBéton), négatif sinon, une étape de demande de transition béton si ce premier test est positif à un instant d'acquisition (Tk) et si le premier jeu de seuils de détection est utilisé à ce même instant d'acquisition (Tk) pour l'opération de traitement du signal, et une étape de demande de transition asphalte si ce premier test est négatif à un instant d'acquisition (Tk) et si le second jeu de seuils de détection est utilisé à ce même instant d'acquisition (Tk) pour l'opération de traitement du signal.

5. Procédé de surveillance selon la revendication 4, **caractérisé en ce que** l'opération de détection et de choix conduit au choix du deuxième jeu de seuils de détection correspondant à une surface de roulement (10) en béton si à un instant d'acquisition (Tk) une demande de transition béton a été effectuée et si la première moyenne glissante (Mn) reste continuellement supérieure au premier seuil de transition (SeuilBéton) pendant unie première durée prédéterminée (Df) suivant ledit instant d'acquisition (Tk).

6. Procédé de surveillance selon la revendication 4 ou 5, **caractérisé en ce que** l'opération de détection et de choix conduit au choix du premier jeu de seuils de détection correspondant à une surface de roulement (10) en asphalte si à un instant d'acquisition (Tk) une demande de transition asphalte a été effectué et si la première moyenne glissante (Mn) reste continuellement inférieure au premier seuil de transition (SeuilBéton) pendant une seconde durée prédéterminée (Df') suivant ledit instant d'acquisition (Tk).

7. procédé de surveillance selon la revendication 5 combinée avec la revendication 6, **caractérisé en que** les première et seconde durées prédéterminées (Df, Df') sont au moins égales une seconde.

8. Procédé de surveillance selon l'une quelconque des revendications 4 à 7, **caractérisé en ce que** l'opération de détection et de choix comprend un deuxième test effectué à chaque instant d'acquisition (Tk), positif si la première moyenne glissante (Mn) oscille autour du premier seuil de transition (SeuilBéton) avec une fréquence supérieure à un second seuil de transition (FréquenceMax), négatif sinon, et conduisant au choix du deuxième jeu de seuils de détection correspondant à une surface de roulement (10) en béton si ce deuxième test est positif.

9. procédé de surveillance selon la revendication 3, **caractérisé en ce que** lesdits premier et deuxième jeux de seuils de détection sont adaptés à des surfaces de roulement (10) sèches respectivement en asphalte et en béton, et **en ce que** l'opération de détection et de choix comprend une étape de détection de l'état de la surface de roulement, sèche ou humide, et une étape de choix soit de ces premier et deuxième jeux de seuils de détection soit de troisième et quatrième jeux de seuils de détection de valeurs prédéterminées adaptées pour des surfaces de roulement (10) humides respectivement en asphalte et en béton.

10. Procédé de surveillance selon la revendication 9, **caractérisé en ce que** l'opération de détection consiste à scruter la fréquence de balayage des essuie-vitres avant du véhicule.

11. Dispositif de surveillance selon l'une quelconque des revendications 4 à 10, **caractérisé en que** n est supérieur ou égal à 48.

## Claims

1. Road monitoring method for a road vehicle able to move on a running surface (10) and comprising at least one sensor (C1) oriented toward this running surface (10), in which:
- a section (11) of the running surface (10) situated facing the sensor (C1) is illuminated with a wave emitter (20) of this sensor (C1) ;
- the waves reflected by the section (11) are picked up with a receiver (10) of the sensor (C1) producing a signal (10) that has an amplitude dependent on the intensity of the waves that are picked up;
and **characterized in that** it comprises a processing operation on the signal (A) obtained from the sensor during which:
- the nature of the running surface (10) is detected by identifying transitions between a first and a second kind of running surface by comparing a sliding average of several amplitude values of the signal obtained from the receiver (30) at successive instants with a transition threshold;
- from at least two sets of predetermined detection thresholds, the one corresponding to the nature of the running surface detected is chosen;
- a marking on the running surface is identified when the reflected signal (A) has an amplitude greater than a predetermined threshold value from the chosen set of detection thresholds.

2. Monitoring method according to Claim 1, **characterized in that** said detection and choice operation makes a choice between at least one first set of detection thresholds of predetermined values corresponding to an asphalt running surface (10), and a second set of detection thresholds of different predetermined values corresponding to a concrete running surface (10).

3. Monitoring method according to Claim 2, **characterized in that** the detection and choice operation includes a step for detecting the dry or wet condition of the running surface (10) and **in that** the set of thresholds is chosen from four sets of thresholds respectively corresponding to the first kind of dry running surface, to the second kind of dry running surface, to the first kind of wet running surface and to the second kind of wet running surface.

4. Monitoring method according to Claim 2, **characterized in that** said processing operation on the signal (A) includes a step for acquisition of the values (Ak) of the amplitude of the signal (A) at successive acquisition instants (Tk) separated by a constant period (T), and a step for calculating, at each acquisition instant (Tk), a sliding average (Mn) of the last n values acquired, and **in that** said detection and choice operation includes a first test performed at each acquisition instant (Tk), positive if the sliding average (Mn) is greater than a first transition threshold of predetermined value (ThreshConcrete), negative otherwise, and a concrete transition request step if this first test is positive at an acquisition instant (Tk) and if the first set of detection thresholds is used at this same acquisition instant (Tk) for the signal processing operation, and an asphalt transition request step if this first test is negative at an acquisition instant (Tk) and if the second set of detection thresholds is used at this same acquisition instant (Tk) for the signal processing operation.

5. Monitoring method according to Claim 4, **characterized in that** the detection and choice operation leads to the choice of the second set of detection thresholds corresponding to a concrete running surface (10) if, at an acquisition instant (Tk), a concrete transition request has been made and if the first sliding average (Mn) remains continually greater than the first transition threshold (ThreshConcrete) for a first predetermined duration (Df) following said acquisition instant (Tk).

6. Monitoring method according to Claim 4 or 5, **characterized in that** the detection and choice operation leads to the choice of the first set of detection thresholds corresponding to an asphalt running surface (10) if, at an acquisition instant (Tk), an asphalt transition request has been made and if the first sliding average (Mn) remains continually less than the first transition threshold (ThreshConcrete) for a second predetermined duration (Df') following said acquisition instant (Tk).

7. Monitoring method according to Claim 8 combined with Claim 6, **characterized in that** the first and second predetermined durations (Df, Df') are at least equal to a second.

8. Monitoring method according to any one of Claims 4 to 7, **characterized in that** the detection and choice operation includes a second test performed at each acquisition instant (Tk), positive if the first sliding average (Mn) oscillates about the first transition threshold (ThreshConcrete) with a frequency greater than a second transition threshold (MaxFrequency), negative otherwise, and leading to the choice of the second set of detection thresholds corresponding to a concrete running surface (10) if this second test is positive.

9. Monitoring method according to Claim 3, **characterized in that** said first and second sets of detection thresholds are adapted to dry running surfaces (10) respectively of asphalt and of concrete, and **in that** the detection and choice operation includes a step for detecting the condition of the running surface, dry or wet, and a step for choosing either these first and second sets of detection thresholds or third and fourth sets of detection thresholds of predetermined values adapted for damp running surfaces (10) respectively of asphalt and of concrete.

10. Monitoring method according to Claim 9, **characterized in that** the detection operation consists in scanning the sweep frequency of the front windscreen wipers of the vehicle.

11. Monitoring device according to any one of Claims 4 to 10, **characterized in that** n is greater than or equal to 48.

## Patentansprüche

1. Straßenüberwachungsverfahren für ein Straßenfahrzeug, das sich auf einer Straßenfläche (10) bewegen kann und wenigstens einen zu dieser Straßenfläche (10) orientierten Sensor (C1) enthält, in dem:
- ein Abschnitt (11) der Straßenfläche (10), der sich gegenüber dem Sensor (C1) befindet, mit einem Wellensender (20) dieses Sensors (C1) bestrahlt wird;
- die von dem Abschnitt (11) reflektierten Wellen mit einem Empfänger (30) des Sensors (C1) aufgefangen werden, wodurch ein Signal (A) erzeugt wird, das eine von der Stärke der aufgefangenen Wellen abhängige Amplitude besitzt;
und **dadurch gekennzeichnet, dass** es eine Operation zur Verarbeitung des von dem Sensor ausgegebenen Signals (A) enthält, in deren Verlauf:
- die Art der Straßenfläche (10) detektiert wird, indem Übergänge zwischen einer ersten und einer zweiten Art von Straßenfläche durch Vergleich eines gleitenden Mittelwerts mehrerer Werte von Amplituden des von dem Empfänger (30) ausgegebenen Signals zu aufeinander folgenden Zeitpunkten mit einem Übergangsschwellenwert identifiziert werden;
- unter wenigstens zwei Sätzen von vorgegebenen Detektionsschwellenwerten jener gewählt wird, der der detektierten Art der Straßenfläche entspricht;
- eine Markierung auf der Straßenfläche identifiziert wird, wenn das reflektierte Signal (A) eine Amplitude besitzt, die größer ist als ein vorgegebener Schwellenwert des gewählten Satzes von Detektionsschwellenwerten.

2. Überwachungsverfahren nach Anspruch 1, **dadurch gekennzeichnet, dass** die Operation des Detektierens und Wählens eine Wahl zwischen wenigstens einem ersten Satz von Detektionsschwellenwerten mit vorgegebenen Werten, die einer Straßenfläche (10) aus Asphalt entspricht, und einem zweiten Satz von Detektionsschwellenwerten mit anderen vorgegebenen Werten, die einer Straßenfläche (10) aus Beton entsprechen, ausführt.

3. Überwachungsverfahren nach Anspruch 2, **dadurch gekennzeichnet, dass** die Operation des Detektierens und Wählens einen Schritt des Detektierens des trockenen Zustands oder des nassen Zustands der Straßenfläche (10) enthält und dass der Satz von Schwellenwerten unter vier Sätzen von Schwellenwerten gewählt wird, die der trockenen ersten Straßenflächenart bzw. der trockenen zweiten Straßenflächenart bzw. der nassen ersten Straßenflächenart bzw. der nassen zweiten Straßenflächenart entsprechen.

4. Überwachungsverfahren nach Anspruch 2, **dadurch gekennzeichnet, dass** die Operation des Verarbeitens des Signals (A) einen Schritt des Erfassens von Werten (Ak) der Amplitude des Signals (A) zu aufeinander folgenden Erfassungszeitpunkten (Tk), die durch eine konstante Periode (T) getrennt sind, und einen Schritt des Berechnens zu jedem Erfassungszeitpunkt (Tk) eines gleitenden Mittelwerts (Mn) der n letzten erfassten Werte enthält und dass die Operation des Detektierens und Wählens einen ersten Test, der zu jedem Erfassungszeitpunkt (Tk) ausgeführt wird und positiv ist, wenn der gleitende Mittelwert (mn) größer als ein erster Übergangsschwellenwert mit vorgegebenem Wert (Betonschwellenwert) ist, und andernfalls negativ ist, einen Schritt des Anforderns eines Betonübergangs, falls dieser erste Test zu einem Erfassungszeitpunkt (Tk) positiv ist und falls der erste Satz von Detektionsschwellenwerten zu diesem Erfassungszeitpunkt (Tk) für die Signalverarbeitungsoperation verwendet wird, und einen Schritt des Anforderns eines Asphaltübergangs, falls dieser erste Test zu einem Erfassungszeitpunkt (Tk) negativ ist und falls der zweite Satz von Detektionsschwellenwerten zu diesem Erfassungszeitpunkt (Tk) für die Signalverarbeitungsoperation verwendet wird, enthält.

5. Überwachungsverfahren nach Anspruch 4, **dadurch gekennzeichnet, dass** die Operation des Detektierens und Wählens zur Wahl des zweiten Satzes von Detektionsschwellenwerten führt, der einer Straßenoberfläche (10) aus Beton entspricht, falls zu einem Erfassungszeitpunkt (Tk) eine Betonübergangsanforderung ausgeführt wird und falls der erste gleitende Mittelwert (Mn) während einer ersten vorgegebenen Dauer (Df) nach dem Erfassungszeitpunkt (Tk) ununterbrochen über dem ersten Übergangsschwellenwert (Betonschwellenwert) bleibt.

6. Überwachungsverfahren nach Anspruch 4 oder 5, **dadurch gekennzeichnet, dass** die Operation des Detektierens und Wählens zur Wahl des ersten Satzes von Detektionsschwellenwerten führt, der einer Straßenoberfläche (10) aus Asphalt entspricht, falls zu einem Erfassungszeitpunkt (Tk) eine Asphaltübergangsanforderung ausgeführt worden ist und falls der erste gleitende Mittelwerte (Mn) während einer zweiten vorgegebenen Dauer (Df') nach dem Erfassungszeitpunkt (Tk) ununterbrochen unter dem ersten Übergangsschwellenwert (Betonschwellenwert) bleibt.

7. Überwachungsverfahren nach Anspruch 5 in Verbindung mit Anspruch 6, **dadurch gekennzeichnet, dass** die erste und die zweite vorgegebene Dauer (Df, Df') wenigstens gleich einer Sekunde sind.

8. Überwachungsverfahren nach einem der Ansprüche 4 bis 7, **dadurch gekennzeichnet, dass** die Operation des Detektierens und Wählens einen zweiten Test enthält, der zu jedem Erfassungszeitpunkt (Tk) ausgeführt wird und positiv ist, falls der erste gleitende Mittelwert (Mn) um den ersten Übergangsschwellenwert (Betonschwellenwert) mit einer Frequenz oszilliert, die größer als ein zweiter Übergangsschwellenwert (MaxFrequenz) ist, und andernfalls negativ ist und zur Wahl des zweiten Satzes von Detektionsschwellenwerten führt, der einer Straßenoberfläche (10) aus Beton entspricht, falls dieser zweite Test positiv ist.

9. Überwachungsverfahren nach Anspruch 3, **dadurch gekennzeichnet, dass** der erste und der zweite Satz von Detektionsschwellenwerten an trockene Straßenflächen (10) aus Asphalt bzw. aus Beton angepasst sind und dass die Operation des Detektierens und Wählens einen Schritt des Detektierens des Zustands der Straßenoberfläche, trocken oder feucht, und einen Schritt des Wählens entweder dieses ersten und zweiten Satzes von Detektionsschwellenwerten oder eines dritten und eines vierten Satzes von Detektionsschwellenwerten mit vorgegebenen Werten, die an feuchte Straßenflächen (10) aus Asphalt bzw. aus Beton angepasst sind, enthält.

10. Überwachungsverfahren nach Anspruch 9, **dadurch gekennzeichnet, dass** die Detektionsoperation darin besteht, die Wischfrequenz der Frontscheibenwischer des Fahrzeugs abzufragen.

11. Überwachungsverfahren nach einem der Ansprüche 4 bis 10, **dadurch gekennzeichnet, dass** n größer oder gleich 48 ist.
